# EUROPÄISCHE PATENTSCHRIFT

(11) **EP 0 667 015 B1**
(45) Veröffentlichungstag und Bekanntmachung des Hinweises auf die Patenterteilung: **05.03.1997**
(21) Anmeldenummer: 93924011.5
(22) Anmeldetag: 29.10.1993
(51) Int. Cl.: G06F 13/378, G06F 13/368

(54) **ANORDNUNG MIT MEHREREN AKTIVEN UND PASSIVEN BUSTEILNEHMERN**
CONFIGURATION WITH SEVERAL ACTIVE AND PASSIVE BUS USERS
AGENCEMENT REGROUPANT PLUSIEURS UTILISATEURS ACTIFS ET PASSIFS DE BUS

(30) Priorität: 04.11.1992 DE 4237259; 12.02.1993 DE 4304259
(43) Veröffentlichungstag der Anmeldung: 16.08.1995
(73) Patentinhaber: SIEMENS AKTIENGESELLSCHAFT, 80333 München (DE)
(72) Erfinder: ABERT, Michael, D-76474 Au (DE); BLOCK, Siegfried, D-76870 Kandel (DE); BOZENHARDT, Johannes, D-76275 Ettlingen (DE); LEIGSNERING, Franz, D-76275 Ettlingen (DE); PFATTEICHER, Werner, D-76327 Pfinztal (DE); SCHEWE, Franz-Clemens, D-76227 Karlsruhe (DE)
(86) Internationale Anmeldenummer: DE9301042
(87) Internationale Veröffentlichungsnummer: WO9410632

(56) Entgegenhaltungen:
- EP-A- 0 206 321
- EP-A- 0 250 698
- GB-A- 2 109 968

## Beschreibung

Die Erfindung betrifft einen aktiven oder einen passiven Busteilnehmer.

Um Hard- und Software-Aufträge in einem Bussystem gleichzeitig auslösen zu können, weisen Speicher in derartigen Anordnungen jeweils einen Speicherbereich auf. Der Inhalt des Speicherbereichs jedes Busteilnehmers muß identisch sein und Änderungen des Inhalts in diesem Speicherbereich müssen synchron erfolgen, wobei verschiedene Laufzeiten im System zu berücksichtigen sind. Unter einem Speicherbereich werden z. B. Datenspeicher (RAM) oder Register der Busteilnehmer verstanden, auf die jeder aktive Busteilnehmer lesend oder schreibend zugreift.

In der älteren deutschen Patentanmeldung P 42 19 005.3 wird ein Rechnersystem mit mehreren miteinander verbundenen Prozessoren vorgeschlagen, denen jeweils ein Speicher zugeordnet ist, wobei die Speicher jeweils einen gemeinsamen Speicherbereich aufweisen, auf den die Prozessoren zugreifen. Der gemeinsame Speicherbereich dient dazu, Betriebszustandswechsel der Prozessoren bzw. eine synchrone Bearbeitung von Prozessoraufträgen einzuleiten. Dieses Rechnersystem hat keinen Bezug zu der Art eines Busteilnehmers, auf den sich die Erfindung bezieht.

Der vorliegenden Erfindung liegt die Aufgabe zugrunde, einen Busteilnehmer anzugeben, auf welchen Speicherschreibzugriff vereinfacht wird. Diese Aufgabe wird gelöst durch einen Busteilnehmer mit den in den Merkmalen des Anspruchs 1 angegebenen Maßnahmen.

Vorteilhafte Ausgestaltungen der Erfindung ergeben sich aus den Unteransprüchen.

Der erfindungsgemäße Busteilnehmer wird insbesondere in einer speicherprogrammierbaren Steuerung eingesetzt, vorzugsweise in einer speicherprogrammierbaren Steuerung mit einem Zentralgerät und mindestens einem Erweiterungsgerät, die über ein den Systembus und die Meldeleitung aufweisendes Verbindungskabel miteinander verbunden sind.

Anhand der Zeichnung, in der ein Ausführungsbeispiel der Erfindung dargestellt ist, werden im folgenden die Erfindung sowie Ausgestaltungen und Vorteile näher erläutert.

Es zeigen:

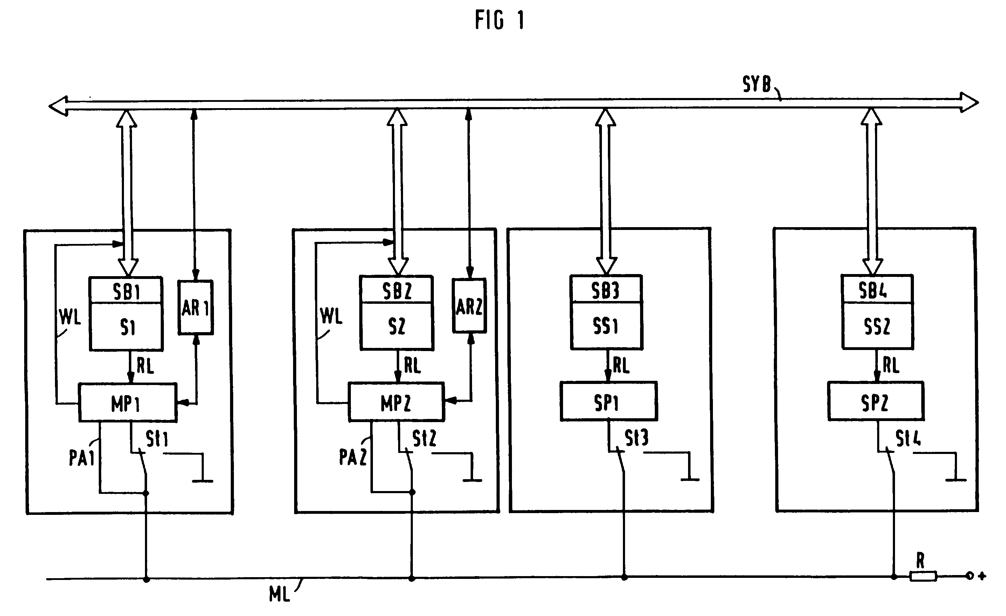

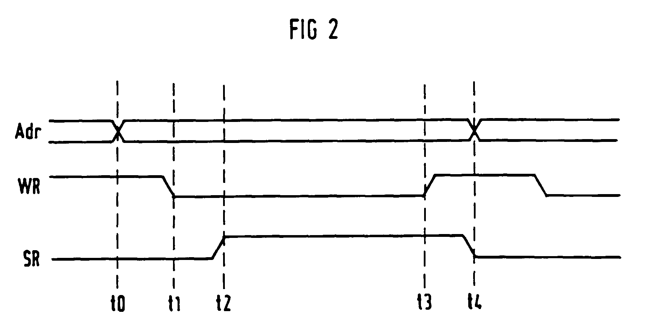

Figur 1 eine Anordnung mit mehreren Busteilnehmern und Figur 2 ein Zeitdiagramm von relevanten Steuersignalen.

In Figur 1 sind aktive und passive Busteilnehmer in Form von Master- und Slave-Prozessoren über einen parallelen Adreß-, Daten- und Steuerleitungen aufweisenden Systembus SYB miteinander verbunden. Die Master-Prozessoren sind mit MP1, MP2, die Slave-Prozessoren mit SP1, SP2 bezeichnet, denen jeweils ein Speicher S1, S2, SS1, SS2 zugeordnet ist. Die Speicher S1, S2, SS1, SS2 weisen jeweils einen Speicherbereich SB1, SB2, SB3, SB4 auf, wobei jeder Prozessor MP1, MP2, SP1, SP2 auf seinen eigenen Speicherbereich SB1, SB2, SB3, SB4 lesend und jeder Master-Prozessor MP1, MP2 auf jeden Speicherbereich SB1, SB2, SB3, SB4 schreibend zugreifen kann. Dazu weisen die Master-Prozessoren MP1, MP2 zur Übertragung eines Lese-und Schreibsignals eine Lese- und eine Schreibleitung RL, WL auf, die Slave-Prozessoren nur eine Leseleitung RL, wobei die Schreibleitung WL über den Systembus SYB zu allen Prozessoren MP1, MP2, SP1, SP2 geführt ist. Die Master-Prozessoren MP1, MP2 sind zusätzlich mit Arbitern AR1, AR2 versehen, um die Verwaltung des Systembusses SYB zu übernehmen, Busanforderungen der Master-Prozessoren zu bearbeiten, Buszuteilungsentscheidungen zu treffen und um den Systembus SYB für nicht zugriffsberechtigte Master-Prozessoren zu verriegeln. Eine Meldeleitung ML ist mit den Prozessoren MP1, MP2 über Pegelabfrageleitungen PA1, PA2 und über durch die Prozessoren MP1, MP2, SP1, SP2 steuerbare Schalter St1, St2, St3, St4 mit einem Masseanschluß verbunden. Über einen Pull-Up-Widerstand R wird die Meldeleitung auf High-Pegel gezogen. Der Pegel auf der Meldeleitung ML dient als Meldesignal SR (System Ready, Figur 2), das von den Master-Prozessoren gelesen wird, und in einem Ruhezustand, während dem die Schalter Stl, ... mit dem Masseanschluß verbunden sind, ist der Pegel des Meldesignals auf Low-Pegel geschaltet. Dieser Low-Pegel kann daher auf der Meldeleitung ML als dominanter Zustand bezeichnet werden, da er den High-Pegel als rezessiven Zustand überlagert. Der dominante Low-Zustand bleibt so lange erhalten, bis alle Schalter St1, ... geöffnet sind.

Im folgenden wird auf Figur 2 verwiesen, in der in einem Zeitdiagramm ein Schreibsignal WR, das Meldesignal SR und ein Adreßsignal Adr dargestellt ist. Es wird angenommen, daß der Master-Prozessor MP1 auf die Speicherbereiche SB1, SB2, SB3, SB4 zwischen einem Zeitpunkt t0 und einem Zeitpunkt t4 schreibend zugreift, um neue Daten in diese Speicherbereiche SB1, SB2, SB3, SB4 einzuschreiben. Dazu adressiert dieser zu einem Zeitpunkt t0 seinen eigenen Speicherbereich SB1 und die Speicherbereiche SB2, SB3, SB4 der Prozessoren MP2, SP1, SP2 und aktiviert das Schreibsignal WR zwischen einem Zeitpunkt t1 und t3. Außerhalb des Schreibzugriffs zu Zeitpunkten vor dem Zeitpunkt t0 und nach dem Zeitpunkt t4 bleiben die Schalter St1, ... geschlossen, und der dominante Low-Zustand stellt sich ein. Dieser Zustand bleibt so lange erhalten, bis die neuen Daten während des Schreibzugriffs in die Speicherbereiche SB1, SB2, SB3, SB4 aller Prozessoren eingeschrieben sind. Die Prozessoren MP1, MP2, SP1, SP2 zeigen dies dem Master-Prozessor MP1 durch das Meldesignal SR an, indem die Prozessoren MP1, MP2, SP1, SP2 nach dem Einschreiben der Daten ihren Schalter St1, St2, St3, St4 öffnen. Haben alle Prozessoren ihren Schalter geöffnet, so ist das Meldesignal SR deaktiviert und schaltet auf den rezessiven High-Pegel um, den der Master-Prozessor über die Meldeleitung ML und die Pegelabfrageleitung PA1 einliest. Dies ist im vorliegenden Beispiel zum Zeitpunkt t2 der Fall. Das Meldesignal SR bleibt so lange im rezessiven Zustand, bis der Schreibzugriff zum Zeitpunkt t4 abgeschlossen ist.

Das Meldesignal SR wird also durch die Prozessoren MP1, MP2, SP1 und SP2 nach folgendem Schema erzeugt:
1. Erfolgt kein Schreibzugriff auf die Speicherbereiche SB1, SB2, SB3, SB4, so aktiviert jeder Prozessor MP1, MP2, SP1 und SP2 durch Schließen der Schalter St1, St2, St3 und St4 das Meldesignal SR, das einen dominanten Zustand einnimmt.
2. Die Prozessoren MP1, MP2, SP1 und SP2, in deren Speicherbereiche SB1, SB2, SB3, SB4 neue Daten eingeschrieben sind, deaktivieren durch Öffnen der Schalter St1, St2, St3 und St4 das Meldesignal SR, das einen rezessiven Zustand einnimmt.

Um zu verhindern, daß ein Master-Prozessor MP1, MP2 während eines Lesezugriffs eines anderen Master-Prozessors MP1, MP2 auf seinen Speicherbereich SB1, SB2 einen Schreibzugriff auf die Speicherbereiche SB1, SB2, SB3, SB4 ausführt, werden die Master-Prozessoren MP1, MP2 sowohl vor einem Schreib- als auch vor einem Lesezugriff arbitriert. Dadurch wird ein Master-Prozessor während eines sogenannten "Read-Modify-Write"-Zugriffs nicht durch andere Master-Prozessoren gestört. Eine "Ineinanderschachtelung" von Zugriffen mehrerer Master-Prozessoren MP1, MP2 ist ausgeschlossen.

Ebenso verweigert ein Slave-Prozessor SP1, SP2 einem Master-Prozessor MP1, MP2 während eines Schreibzugriffs dieser Master-Prozessoren MP1, MP2 die Quittung, d. h., die Slave-Prozessoren SP1, SP2 aktivieren das Meldesignal SR (dominanter Zustand), falls die Slave-Prozessoren SP1, SP2 gerade aus ihrem Speicherbereich lesen. Der Schreibzugriff wird so lange gestoppt, bis die Slave-Prozessoren SP1, SP2 ihre internen Leseoperationen beendet haben.

Zum Anschluß von Prozessoren, die über keine Steuerleitung ML für das Meldesignal SR verfügen, kann eine Adaptionseinrichtung zwischen den jeweiligen Prozessoren und dem Systembus SYB eingefügt werden. Diese erzeugt das Meldesignal SR durch einen Timer, dessen Ablaufzeit die längste Dauer eines Zugriffszyklus übersteigen muß. Es wird abgebrochen, sobald die Adaptionseinrichtung einen High-Pegel des Meldesignals SR erkennt. Falls ein solcher Prozessor aus der Adaptionseinrichtung gezogen wird und ein Zugriff stattfindet, kann ein Abbruch des Zugriffs erst nach Ablauf des Timers erfolgen. Durch die Adaptionseinrichtung ist die Kompatibilität der neuen Anordnung mit bisher verfügbaren Prozessoren gewahrt.

Interface-Module, die zur Kopplung eines Zentralgerätes mit Erweiterungsgeräten dienen, halten das Meldesignal SR bei einem Zugriff auf Prozessoren in einem Erweiterungsgerät so lange auf Low-Pegel, bis die entfernteste Einheit in ihren Koppelsträngen das Schreibsignal empfangen und ihr Meldesignal SR an das Zentralgerät zurückgegeben hat. Die dafür erforderliche Zeit entspricht der zweifachen maximalen Signallaufzeit im Strang. Diese Zeitinformation entnimmt das Interface-Modul ihrem individuellen Strang-Timing bzw. der Information über die Kabellänge zwischen den jeweiligen Prozessoren.

## Patentansprüche

1. Aktiver oder passiver Busteilnehmer mit Mitteln zum Erzeugen eines Meldesignals (SR), welches dominante und rezessive Zustände aufweist und welches einem gerade auf einen Speicherbereich (SB1, SB2, SB3, SB4) dieses Busteilnehmers (SP1, SP2) zugreifenden Busteilnehmer (MP1, MP2) anzeigt, ob Daten in den Speicherbereich (SB1, SB2, SB3, SB4) eingeschrieben werden, wobei
- außerhalb eines Zugriffszyklus das Meldesignal (SR) einen dominanten Zustand aufweist und
- während eines Zugriffszyklus das Meldesignal (SR) einen dominanten Zustand aufweist, falls die Daten noch nicht in den Speicherbereich (SB1, SB2, SB3, SB4) eingeschrieben sind.

2. Anordnung
- mit mehreren Busteilnehmern (MP1, MP2, SP1, SP2) nach Anspruch 1, wobei die Busteilnehmer (MP1, MP2, SP1, SP2) über einen parallelen Adreß-, Daten- und Steuerleitungen aufweisenden Systembus (SYB) und über eine Meldeleitung (ML) zur Übertragung des Meldesignals (SR) verbunden sind und wobei jeder Busteilnehmer (MP1, MP2, SP1, SP2) auf seinen eigenen Speicherbereich (SB1, SB2, SB3, SB4) lesend und jeder aktive Busteilnehmer (MP1, MP2) auf jeden Speicherbereich (SB1, SB2, SB3, SB4) schreibend zugreifen kann, und
- mit einem Arbiter (AR1, AR2) zum Verwalten des Systembusses (SYB).

3. Anordnung nach Anspruch 2, **dadurch gekennzeichnet**, daß während eines Lesezugriffs der passiven Busteilnehmer (SP1, SP2) auf ihre Speicherbereiche (SB3, SB4) die passiven Busteilnehmer (SP1, SP2) einen dominanten Zustand des Meldesignals (SR) erzeugen.

4. Anordnung nach Anspruch 2 oder 3, **dadurch gekennzeichnet**, daß der Arbiter (AR1, AR2) vor einem Lese- oder Schreibzugriff eines aktiven Busteilnehmers (MP1, MP2) den Systembus (SYB) gegen Zugriffe anderer aktiver Busteilnehmer (MP1, MP2) blockiert.

5. Anordnung nach einem der Ansprüche 2 bis 4, **dadurch gekennzeichnet**, daß die Busteilnehmer (MP1, MP2, SP1, SP2) Baugruppen in einem Baugruppenträger sind.

6. Anordnung nach einem der Ansprüche 2 bis 4, **dadurch gekennzeichnet**,
- daß die Busteilnehmer (MP1, MP2, SP1, SP2) Baugruppen in mehreren Baugruppenträgern sind und
- daß die Steuerleitung (ML) in alle Baugruppenträger geführt ist.

7. Anordnung nach Anspruch 5 oder 6, **dadurch gekennzeichnet**, daß Baugruppen, die kein Meldesignal (SR) erzeugen können, über eine Adaptionseinrichtung an den Systembus (SYB) angeschlossen sind, die ein Meldesignal erzeugt, das, mindestens um die längste Dauer eines Zugriffszyklus verzögert, den rezessiven Zustand einnimmt.

8. Adaptionseinrichtung für eine Anordnung nach Anspruch 7.

9. Speicherprogrammierbare Steuerung mit einer Anordnung nach einem der Ansprüche 2 bis 7.

10. Speicherprogrammierbare Steuerung mit einem jeweils eine Anordnung nach einem der Ansprüche 2 bis 7 aufweisenden Zentralgerät und mindestens einem Erweiterungsgerät, die über ein den Systembus (SYB) und die Meldeleitung (ML) aufweisendes Verbindungskabel verbunden sind.

## Claims

1. Active or passive bus user having means to generate a status signal (SR), which has dominant and recessive states and which indicates to a bus user (MP1, MP2) which is accessing a memory area (SB1, SB2, SB3, SB4) of this bus user (SP1, SP2) whether data are written into the memory area (SB1, SB2, SB3, SB4), whereby
- outside an access cycle the status signal (SR) has a dominant state and
- during an access cycle the status signal (SR) has a dominant state in case the data are not yet written into the memory area (SB1, SB2, SB3, SB4).

2. Arrangement
- having several bus users (MP1, MP2, SP1, SP2) according to claim 1, whereby the bus users (MP1, MP2, SP1, SP2) are connected by way of a parallel system bus (SYB) having address, data and control lines and by way of a signal line (ML) for the transmission of the status signal (SR) and whereby each bus user (MP1, MP2, SP1, SP2) can access its own memory area (SB1, SB2, SB3, SB4) in a reading manner and each active bus user (MP1, MP2) can access each memory area (SB1, SB2, SB3, SB4) in a writing manner, and
- having an arbiter (AR1, AR2) to manage the system bus (SYB).

3. Arrangement according to claim 2,
characterized in that during a read access of the passive bus users (SP1, SP2) to their memory areas (SB3, SB4) the passive bus users (SP1, SP2) generate a dominant state of the status signal (SR).

4. Arrangement according to claim 2 or 3,
characterized in that the arbiter (AR1, AR2) before a read or write access of an active bus user (MP1, MP2) blocks the system bus (SYB) against accesses of other active bus users (MP1, MP2).

5. Arrangement according to one of claims 2 to 4, characterized in that the bus users (MP1, MP2, SP1, SP2) are modules in a mounting rack.

6. Arrangement according to one of claims 2 to 4, characterized in that
- the bus users (MP1, MP2, SP1, SP2) are modules in several mounting racks and
- the control line (ML) is guided into all mounting racks.

7. Arrangement according to claim 5 or 6,
characterized in that modules which cannot generate a status signal (SR) are connected by way of an adaptation device to the system bus (SYB) which device generates a status signal which, delayed at least by the longest duration of an access cycle, occupies the recessive state.

8. Adaptation device for an arrangement according to claim 7.

9. Memory-programable control having an arrangement according to one of claims 2 to 7.

10. Memory-programmable control having a central device with a respective arrangement according to one of claims 2 to 7 and having at least one extension device, which are connected by way of a connection cable having the system bus (SYB) and the signal line (ML).

## Revendications

1. Utilisateur actif ou passif de bus comportant des moyens pour produire un signal d'état (SR), qui présente des états dominants et récessifs et qui indique à un utilisateur de bus (MP1, MP2) accédant justement à une zone de mémoire (SB1, SB2, SB3, SB4) de cet utilisateur de bus (SP1, SP2) si des données sont écrites dans la zone de mémoire (SB1, SB2, SB3, SB4), sachant que
- en dehors d'un cycle d'accès, le signal d'état (SR) présente un état dominant, et
- pendant un cycle d'accès, le signal d'état (SR) présente un état dominant si les données ne sont pas encore écrites dans la zone de mémoire (SB1, SB2, SB3, SB4).

2. Dispositif
- comportant plusieurs utilisateurs de bus (MP1, MP2, SP1, SP2) selon la revendication 1, selon lequel les utilisateurs de bus (MP1, MP2, SP1, SP2) sont reliés par l'intermédiaire d'un bus de système (SYB) parallèle comportant des lignes d'adresses, des lignes de données et des lignes de commande et par l'intermédiaire d'une ligne d'état (ML) destinée à la transmission du signal d'état (SR) et selon lequel chaque utilisateur de bus (MP1, MP2, SP1, SP2) peut accéder en lecture à sa propre zone de mémoire (SB1, SB2, SB3, SB4) et chaque utilisateur actif de bus (MP1, MP2) peut accéder en écriture à chaque zone de mémoire (SB1, SB2, SB3, SB4), et
- comportant un arbitre (AR1, AR2) pour la gestion du bus de système (SYB).

3. Dispositif selon la revendication 2, caractérisé par le fait que, pendant un accès en lecture des utilisateurs passifs de bus (SP1, SP2) à leurs zones de mémoire (SB3, SB4), les utilisateurs passifs de bus (SP1, SP2) produisent un état dominant du signal d'état (SR).

4. Dispositif selon la revendication 2 ou 3, caractérisé par le fait que, avant un accès en lecture ou en écriture d'un utilisateur actif de bus (MP1, MP2), l'arbitre (AR1, AR2) bloque le bus de système (SYB) contre des accès d'autres utilisateurs actifs de bus (MP1, MP2).

5. Dispositif selon l'une des revendications 2 à 4, caractérisé par le fait que les utilisateurs de bus (MP1, MP2, SP1, SP2) sont des cartes de circuits imprimés dans un support de cartes.

6. Dispositif selon l'une des revendications 2 à 4, caractérisé par le fait que
- les utilisateurs de bus (MP1, MP2, SP1, SP2) sont des cartes de circuits imprimés dans plusieurs supports de cartes et
- la ligne de commande (ML) est conduite dans tous les supports de cartes.

7. Dispositif selon la revendication 5 ou 6, caractérisé par le fait que des cartes qui ne peuvent pas produire de signal d'état (SR) sont raccordées au bus de système (SYB) par l'intermédiaire d'un dispositif d'adaptation qui produit un signal d'état qui, au moins retardé de la plus longue durée d'un cycle d'accès, prend l'état récessif.

8. Dispositif d'adaptation pour un dispositif selon la revendication 7.

9. Commande par programme enregistré comportant un dispositif selon l'une des revendications 2 à 7.

10. Commande par programme enregistré comportant un appareil central, comprenant un dispositif selon l'une des revendications 2 à 7, et au moins un appareil d'extension, ces appareils étant reliés par l'intermédiaire d'un câble de liaison comprenant le bus de système (SYB) et la ligne d'état (ML).
